# EUROPÄISCHE PATENTSCHRIFT

(11) **EP 4 407 209 B1**
(45) Veröffentlichungstag und Bekanntmachung des Hinweises auf die Patenterteilung: **17.12.2025**
(21) Anmeldenummer: 24153111.0
(22) Anmeldetag: 22.01.2024
(51) Int. Cl.: F16G 11/10

(54) **SEILSPANNER MIT EINEM SEILHALTER UND SET VON DERARTIGEN SEILSPANNERN**
CABLE TENSIONER HAVING A CABLE HOLDER AND SET OF SUCH CABLE TENSIONERS
TENDEUR DE CÂBLE AVEC UN SUPPORT DE CÂBLE ET ENSEMBLE DE TELS TENDEURS DE CÂBLE

(30) Priorität: 24.01.2023 DE 102023101629
(43) Veröffentlichungstag der Anmeldung: 31.07.2024
(73) Patentinhaber: Kalpin, Christian, 47475 Kamp-Lintfort (DE)
(72) Erfinder: Kalpin, Christian, 47475 Kamp-Lintfort (DE)
(74) Vertreter: Schoenen, Norbert

(56) Entgegenhaltungen:
- FR-A- 1 403 335
- JP-A- 2001 140 992
- US-A- 5 015 023

## Beschreibung

Die Erfindung betrifft einen Seilspanner mit einem Seilhalter (1) mit einem Spannzylinder (60), welcher ein Gehäuse für den Seilhalter (1) bildet, A mit einem im Wesentlichen innenliegenden Klemmelement, das einen nach außen gerichteten Bereich hat und das sich durch Druck auf den nach außen gerichteten Bereich gegen die Kraft einer Feder (90) aus einer Klemmposition in eine Freigabeposition bewegt, wobei das Klemmelement mehrere Spannbacken (70) aufweist, die sich durch Druck auf den nach außen gerichteten Bereich voneinander lösen, und wobei die Feder (90) geeignet ist, über ein Konusteil (80) die Spannbacken (70) zusammenzudrücken, wobei der Seilspanner ein äußeres, im Gebrauch geschlossenes Gehäuse aufweist, das den Seilhalter (1) im Wesentlichen umschließt, wobei der Spannzylinder (60) ein Außengewinde (9) aufweist und in einer mit einem Innengewinde versehenen Durchführung in dem äußeren Gehäuse angeordnet ist, wodurch der Seilhalter (1) geeignet ist, ein Seil durch Verdrehen des Außengewindes (9) gegenüber dem Innengewinde zu spannen, wobei das äußere Gehäuse eine Bohrung (3) aufweist, die zur Aufnahme eines Befestigungselements (30), insbesondere einer Schraube, geeignet ist, wobei das äußere Gehäuse einteilig ist, wobei die Bohrung (3) gegenüber einer verschließbaren Öffnung angeordnet ist, welche die mit dem Innengewinde versehene Durchführung bildet, dass durch die mit dem Innengewinde versehene Durchführung in dem äußeren Gehäuse bei nicht eingedrehtem Seilhalter (1) ein Werkzeug hindurchführbar ist, welches geeignet ist zum Eindrehen eines in der Bohrung (3) angeordneten Befestigungselements (30) zur Befestigung des Seilspanners an einer Wand, sowie ein Set von derartigen Seilspannern.

Vorteilhafte Ausgestaltungen der Erfindung sind in den Unteransprüchen angeführt.

### Hintergrund

Bei Seilspann-Markisen, die als Terrassendach und/oder der Innenbeschattung dienen, ist das Textil, das "Segeltuch", zwischen parallel laufenden Edelstahlseilen gespannt und an diesen mittels Laufhaken befestigt, so dass das Textil entlang der Edelstahlseile verschoben werden kann.

Die Seilspann-Markisen, die die Form einer langen rechteckigen Textilbahn haben, werden entlang der an den Seiten verlaufenden Edelstahlseile auf- und zugeschoben.

Dazu ist es notwendig, die Enden des Seils mit Hilfe eines oder mehrerer so genannter Seilspanner an einer Wand, einem Balken oder dergleichen zu befestigen, zu spannen und auf Spannung zu halten.

Bekannte Seilspanner zum Spannen der Seile, insbesondere Drahtseile, für eine Seilspannmarkise haben mehrere Nachteile, die behoben werden sollen. Folgende Verbesserungen sollen hierbei erreicht werden:
- Gutes Design
- Möglichst dezente und nicht technische Optik
- Keine Sichtschrauben
- Bessere Funktion
- Seilabstand zum Längsbalken so gering wie möglich
- Größe des Spannsystems vom Querbalken zur Markise möglichst gering, insbesondere kleiner als 40 mm x 40 mm
- Einfache Montage auch für Laien
- Montierbar mit geringer Anzahl an Werkzeugen
- Fehlmontage muss vermieden werden
- Ablängung des Seils erfolgt beim Kunden
- Witterungsbeständigkeit
- Kein Herausrutschten des Seils durch das Spannen.

Der Seilspanner soll für die Wand- und Deckenmontage sowie für die Montage seitlich an einem Balken geeignet sein.

Konkret wird ein Seilspanner angestrebt, der zum Spannen eines 2 mm dicken Stahl- oder Nylonseiles von Punkt A nach Punkt B mit möglichst wenig Werkzeug geeignet ist. Dieser Seilspanner soll speziell bei Terrassendach-Innenbeschattungen (sogenannte Seilspannmarkisen) Einsatz finden. Dazu müssen zwei parallel laufende Seile gespannt werden, sodass daran mittels Laufhaken ein Segeltuch mit mehreren Kilogramm Gewicht aufgehängt werden kann.

### Zum Stand der Technik

Viele bekannte Systeme werden auf beiden Seiten gespannt. Die Nachteile: Sie sind kompliziert in Ihrer Montage, sehen klobig aus oder erfüllen nicht zu 100 % ihren Zweck, da das Seil herausrutschen kann.

Des Weiteren gibt es Systeme, bei denen der Hersteller das Seil vorkonfektionieren muss, d. h. ablängen und gegebenenfalls mit einer Pressklemme bestücken. Dadurch entstehen längere Herstellungs- und entsprechende lange Lieferzeiten.

Ein Drahtseilhalter ist aus DE 10 2005 007 737 B4 (Seil- & Netztechnik Reutlinger GmbH) bekannt.

Der Halter weist eine zylindrisch ausgebildete äußere Hülse auf, in welcher eine innere Hülse in axialer Richtung verschiebbar angeordnet ist. Entlang der axialen Mittelachse der inneren Hülse ist ein Durchgang für ein Drahtseil ausgebildet, an dem der Halter festgeklemmt werden soll. Der Durchgang ermöglicht ein Bewegen der inneren Hülse und des gesamten Halters entlang des Befestigungsmittels.

Als Klemmelemente sind in einer Seitenwand der inneren Hülse ausgebildeten Öffnungen über den Umfang verteilt drei bewegbare Kugeln vorgesehen, deren Durchmesser größer ist als die Wandstärke der Seitenwand der inneren Hülse im Bereich der Öffnung.

Wenn die Kugeln nach innen gedrückt werden, klemmen sie das Drahtseil als Befestigungsmittel ein. Dazu wirkt durch die konisch zulaufende Innenwand der äußeren Hülse eine Normalkraft auf ein Kugel ein, wenn die innere Hülse in der äußeren Hülse verschoben wird. Dadurch übt die Kugel eine Flächenpressung auf das Drahtseil aus. Sobald die durch die Kugeln auf das Drahtseil einwirkende Flächenpressung bzw. die Haftreibungskraft größer ist als die Zugkraft des an dem Halter bzw. Drahtseil aufgehängten Gegenstandes, rutscht das Drahtseil aufgrund der Haftreibung zwischen der Kugel und dem Drahtseil nicht mehr durch.

Der aufzuhängende Gegenstand ist dabei an einem ebenfalls mit einem Durchgang für das Befestigungsmittel versehenen Befestigungselement bspw. durch Aufschrauben auf ein Außengewinde befestigt. Das Befestigungselement ist in das eine Ende der äußeren Hülse eingeschraubt.

Zwischen dem Befestigungselement und der inneren Hülse ist eine Feder angeordnet, welche die innere Hülse in die in dem konisch verjüngten Teil der äußeren Hülse liegende Klemmposition vorspannt. In dieser maximalen Klemmposition liegen die als Klemmelemente dienenden Kugeln an der Innenwand der äußeren Hülse an und reichen etwas in den Durchgang herein, so dass ein durch den Durchgang verlaufendes Drahtseil durch jede Kugel eingedrückt und dabei verformt wird.

Hier ist es jedoch nicht möglich, dass ein Drahtseil auf Spannung gedreht und gehalten wird, also das Spannen eines Drahtseils von dem einen Drahtseilhalter zu dem anderen Drahtseilhalter durchzuführen. Das Seil kann sich nämlich beim Hereinschrauben in das Seilhaltergehäuse herausdrehen.

Außerdem ist aus dem Stand der Technik bekannt:
Der Halter für Objekte nach der DE 10 2009 015 288 A1 unterscheidet sich erheblich von der vorliegenden Erfindung, sowohl im Aufbau als auch in dessen Anwendung. Dieser sogenannte "Halter für Objekte" ist, wie der Name schon sagt, ein reiner Halter, ohne die Möglichkeit, diesen mittels eines Außengewindes und einer dafür vorgesehene Gewindevorrichtung einzuschrauben und ein Stahlseil von A nach B zu spannen.

Auch bei der Vorrichtung nach der DE 20 2013 101 806 U1 lässt sich das Seil nicht mittels Gewinde zwischen zwei Elementen spannen. Es unterscheidet sich daher ebenfalls von der vorliegenden Erfindung.

Bei der Vorrichtung nach der FR 1 403 335 A gilt das Gleiche.

Auch der Halter der Seil- & Netztechnik Reutlinger GmbH nach der DE 10 2005 007 737 B4 unterscheidet sich erheblich von der vorliegenden Erfindung. Wie in der DE 10 2009 015 288 A1 wird hier ein Seil lediglich gehalten. Es ist weder über ein Gewinde mit Spannmechanismus spannbar, noch hält der Seilspanner gewisse Zugkräfte aus. Außerdem dreht sich das Seil nach Versuchen des Anmelders, mit diesem System ein Seil zu spannen, aus der innenliegenden Mechanik heraus. Es ist kein Drahtseil mit Zugkraft spannbar. Dies ist auch in der vorliegenden Patentanmeldung an anderer Stelle ausgeführt.

Die in der US 20140138596 A1 vorgesehene Befestigung des Seilhalters an den vertikalen Profilen 12 ermöglicht keine einfache Montage durch einen Laien mit einfachem Werkzeug, wie zum Beispiel an Figur 1 dieser Druckschrift erkennbar ist. Es ist nämlich nach dem Montieren der Seilspanner an den vertikalen Profilen 12 erforderlich, das gesamte System durch Anschweißen der horizontalen Profile 14 fertigzustellen. Ansonsten würde Regenwasser in die hohlen Profile 12 hineinlaufen und auf Dauer die Funktionsfähigkeit der Seilspanner beeinträchtigen.

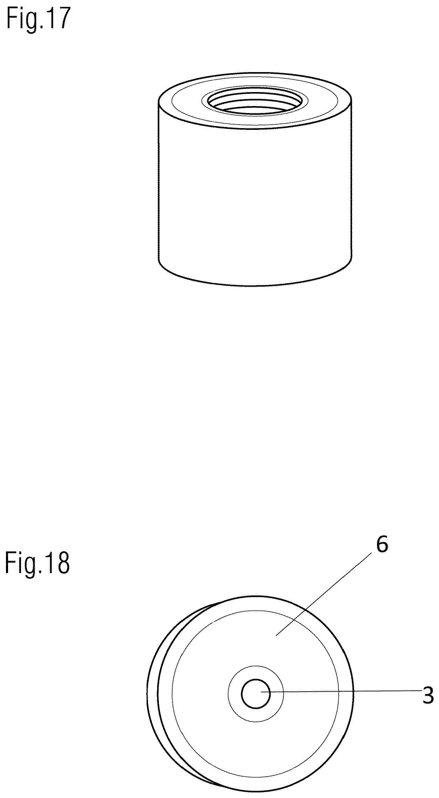

Außerdem muss der Anwender vorher den Seilhalter während des Seilspannens zusammenbauen (Figur 17). Diese für einen Laien keineswegs einfache Montage ist offensichtlich für einen professionellen Geländerbauer vorgesehen.

Bei der Erfindung des Anmelders ist im Gegensatz dazu der Seilhalter selber bereits gebrauchsfertig montiert. Durch das Drücken auf die vordere Spitze weiten sich die Spannbacken und das Seil lässt sich problemlos einschieben. Durch die Rücksprungkraft der dahinter liegenden Feder werden die Spannbacken bei der Erfindung des Anmelders auf das Seil gedrückt. Durch das innenliegende konische Verhältnis zu den konischen Spannbacken, entsteht ein so hoher Druck auf das Seil, dass es Zugkräfte bis zu 300 kg aushält.

Das "Spannschloss" nach der DE 84 36 837 U1 hat nichts mit der vorliegenden Erfindung gemeinsam. Es erlaubt mittels eines Griffstücks eine Verbindung zu den gängigsten Gewindearten über ein Rechts / Linksgewinde. Ein Drahtseil kann damit nicht gespannt werden.

Ein Seilspanner nach dem Oberbegriff des Anspruchs 1 ist aus US 5 015 023 A bekannt.

### Aufgabe und Lösung der Erfindung

Aufgabe der Erfindung: Es sollen die oben genannten Nachteile des Standes der Technik vermieden werden.

Das Ziel war: Einen kleinen, handlichen, schlichten, modernen und einfach zu bedienenden Seilspanner in einem reduzierten Design ohne sichtbare Schraubenköpfe zu entwickeln, der es zulässt, ein nicht vorkonfektioniertes Stahl- oder Nylonseil einfach und mit so wenig Werkzeug wie möglich von Punkt A nach Punkt B zu spannen und dabei aber auch hohe Zug- und Haltekräfte aushält. Zudem soll es möglich sein, ohne Werkzeug und nur mit einem Handgriff das Seil aus dem Seilhalter zu lösen. Durch das schnelle Lösen eines Stahl- oder Nylon-Seils lässt sich der Seilspanner selbst dort einsetzen, wo eine nur kurzzeitige Anwendung bzw. ein entsprechender Gebrauch nötig ist, z.B. als Wäscheleine.

Insbesondere liegt die Aufgabe der Erfindung darin, gegenüber dem Stand der Technik einen Seilspanner zum Spannen eines Stahlseil zwischen zwei Punkten zu schaffen, wobei der Seilspanner gleichzeitig witterungsbeständig ist, (was durch das nach der Montage geschlossene Gehäuse erreicht wird,) einfach und präzise (durch Verdrehen des Seilhalters gegenüber dem Gehäuse des Seilspanners) spannbar ist und außerdem auch für Laien einfach montierbar ist, ohne dass ein besonderes Werkzeug erforderlich ist und wobei nach der Montage die Befestigungsmittel, insbesondere Schrauben, nicht von außen sichtbar sind, (was durch die an einer bestimmten Stelle angebrachte Bohrung 3 erreicht wird).

Diese Aufgabe wird bei einem Seilspanner der eingangs genannten Art erfindungsgemäß dadurch gelöst, dass der Seilspanner ein im Gebrauch geschlossenes Gehäuse aufweist,
dass der Seilhalter (1) ein Außengewinde (9) aufweist und in einer mit einem Innengewinde versehenen Durchführung im Gehäuse angeordnet ist,
wodurch der Seilhalter (1) geeignet ist, ein Seil durch Verdrehen des Außengewindes (9) gegenüber dem Innengewinde zu spannen,
dass das Gehäuse eine Bohrung (3) aufweist, die zur Aufnahme eines Befestigungselements (30), insbesondere einer Schraube, geeignet ist, wobei die Bohrung (3) gegenüber einer verschließbaren Öffnung angeordnet ist.

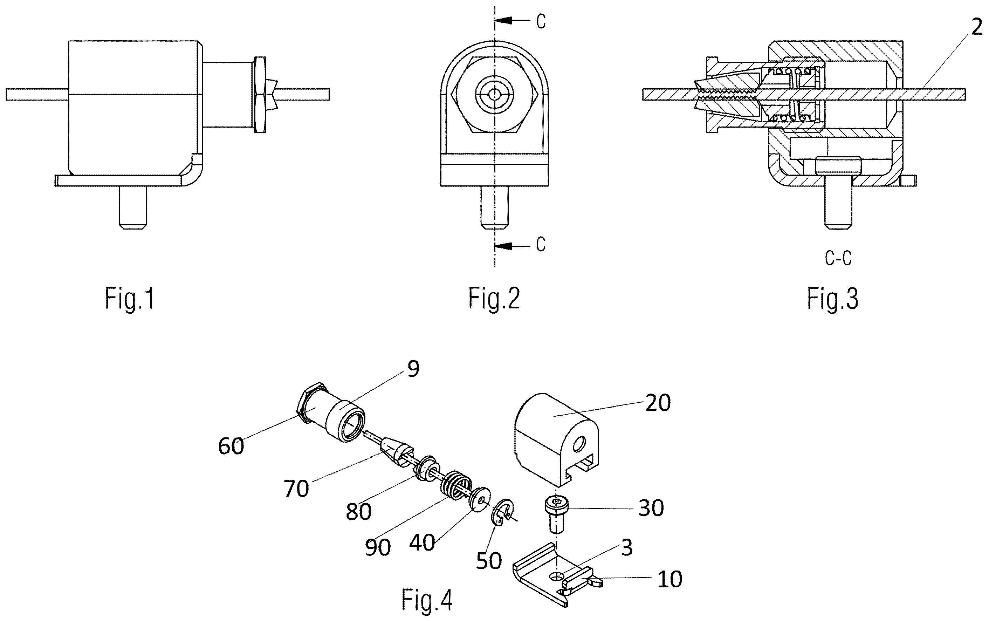

Die 2 oder 3 Öffnungen im Gehäuse, nämlich für den Seilhalter, das Befestigungselement (Schraube 30) und ggfs. den Spanndraht 2 in Figur 3, sind im Gebrauch verschlossen, so dass das Gehäuse im Gebrauch geschlossen und damit witterungsbeständig, insbesondere wasserdicht ist.

"Verschließbare Öffnung" bedeutet erfindungsgemäß, dass die Öffnung durch das Einschrauben des Seilhalters 1 verschließbar ist; oder, in Ausführungsformen nicht mehr von Ansprüchen gedeckt, dass die Öffnung durch den oberen Gehäuseteil 20 oder durch den Deckel 4 verschließbar ist.

Mit der Erfindung wird erreicht, dass jeder Benutzer, der nur über wenig bis keine technisch/handwerklichen Kenntnisse und Fähigkeiten verfügt, ein nicht vorkonfektioniertes Stahl- oder Nylonseil von A nach B spannen und Gegenstände daran aufhängen kann, ohne dass das Seil durch das angehängte Gewicht herausrutscht. Darüber hinaus soll der Seilspanner auch dort Anwendung finden, wo ein reduziertes Design und eine schnelle, einfache und kurzzeitige Montage eines Stahl- oder Nylonseils nötig ist.

Dazu mussten die Erfinder den inneren Aufbau im Vergleich zum bekannten Seilhalter so verändern, dass der erfindungsgemäße Seilhalter viel höhere Zugkräfte und Gewichte aushält. Zudem durfte sich das Seil beim Hereinschrauben in das Seilhaltergehäuse nicht herausdrehen, wie es bei dem oben genannten Reutlinger Seilhalter der Fall ist.

Des Weiteren arbeiten die Erfinder bei dem Seilhalter jeweils mit einem Rechts- und einem Linksgewinde (9) je Set, damit sich ein Stahl- oder Nylonseil von A nach B spannen lässt.

Dieser Seilspanner ist vielseitig einsetzbar. So kann dieser Seilspanner z.B. in Verbindung mit einem Stahl- oder Nylonseil unter anderem auch zum Befestigen von Gardinen, Duschvorhängen, Wäscheleine, und dergleichen verwendet werden.

### Vorteile der Erfindung

Die Vorteile werden durch bestimmte Bauteile und die Bauart ermöglicht:
1) Insbesondere die innenliegende mechanischen Bauweise des Seilhalters garantiert die einfache Anwendung, sprich das schnelle und einfache Befestigen und Lösen eines Stahl- oder Nylonseils im Seilhalter.
2) Der Seilhalter besteht aus einem Spannzylinder mit zwei innenliegenden Spannbacken, die mittels einer Spiralfeder und einem davor liegendem Konusteil mechanisch die Spannbacken durch Eindrücken des vorderen Teils lösen, wobei die Spannbacken sich beim Nachlassen des Drucks durch die Federkraft wieder zurück bewegen und schließen.
3) Beim Einschieben eines Stahl- oder Nylonseils drückt das Seilende die Spannbacken gegen die Spiralfeder nach hinten. Damit lockern sich die Spannbacken automatisch, so dass das Stahl- oder Nylonseil im nicht vorkonfektionierten Zustand, jedoch nach dem Ablängen manuell einfach und schnell eingeschoben werden kann. Nach dem Loslassen des Seilendes werden durch den Druck der Feder von hinten die Spannbacken wieder nach vorne und damit auf das Seil gepresst, klemmen das Seilende ein und spannen so das Seil fest.
4) Der Seilspanner ist schlicht, sehr klein und trotzdem funktional. Mittels einer einzigen Schraube, welche nach der Montage nicht mehr sichtbar ist, lässt sich das Seilspannergehäuse schnell und leicht überall montieren. Durch einfaches Eindrehen des Seilhalters in das Seilspannergehäuse lässt sich in wenigen Schritten mit nur einem Werkzeug ein Stahl- oder Nylonseil spannen.
5) Das Herausnehmen bzw. Demontieren eines Stahl- oder Nylonseils lässt sich ohne Werkzeug vornehmen. Durch einfaches manuelles Eindrücken der aus dem Spannzylinder herausschauenden spitzen Enden der Spannbacken geben die Spannbacken das Seil frei und das Stahl- oder Nylonseil lässt sich einfach herausnehmen.

Dabei ist besonders wichtig:
- Einfache und schnelle Montage für jeden Nutzer möglich
- Kleines und reduziertes Design ohne sichtbare Schraubenköpfe
- Spannbarer Mechanismus, mit nur einem Werkzeug kann ein Stahl- oder Nylonseil gespannt werden
- Einfaches Lösen eines Stahl- oder Nylonseils ohne Werkzeug möglich
- Vielseitig Anwendungs- und Einsatzmöglichkeiten
- Hält hohe Zugkräfte und hohes Gewicht aus
- Mehrere Montagearten ohne große bauliche Veränderung möglich

Die Erfinder haben bei der etwa 1 Jahr dauernden Entwicklung der Erfindung die folgenden technischen Schwierigkeiten in nicht naheliegender Weise überwunden.

Die Herausforderung bestand darin, einen schlichten, kleinen und vor allem preiswerten Seilspanner mit klarem Design und ohne sichtbare Schraubenköpfe zu schaffen, der den Anforderungen von der einfachen Montage bis zur einfachen Bedienbarkeit und vor allem den Fähigkeiten, ein Seil zu spannen und auf Spannung sowohl ohne Gewicht als auch mit Gewicht langfristig zu halten, ohne herauszurutschen, gerecht wird.

Die ersten Schwierigkeiten bestanden darin, einen Seilspanner zu entwickeln, der sowohl für die seitliche Wandmontage als auch für die stirnseitige Wandmontage geeignet ist, wobei sich das Design dadurch nicht wesentlich verändert. Des Weiteren sollte der Seilspanner ein Stahl- oder Nylonseil spannbar machen und langfristig auf Spannung halten, fixieren und ein Gewicht tragen können, ohne dass ein Stahl- oder Nylonseil herausrutscht.

Untersucht wurde auch ein Drahtseilhalter nach der DE 10 2005 007 737 B4 (Seil- & Netztechnik Reutlinger GmbH), der im inneren Kugeln enthält, die mittels eines Federvorsprungs auf das Seil drücken.

Nach einigen Tests stellte sich heraus, dass die Wicklungen eines Edelstahlseils beim Hereindrehen des bekannten Drahtseilhalters in das Seilspannergehäuse wie ein Gewinde wirken und sich so das Seil nicht spannen ließ, weil sich das Seil dabei wieder herausdrehte.

Die Erfinder änderten darauf den inneren Aufbau und verwendeten längliche Backen. Auch mit diesen Backen drehte sich das Seil durch das Spannen des Seilhalters wieder heraus.

Es wurde herausgefunden, dass die Reibungswerte verändert werden mussten. Die Backen wiesen auf der äußeren Wand des Spannzylinders eine zu geringe Reibung auf.

Die Herausforderung bestand folglich darin, diesen Aufbau so zu verändern, dass die Reibungswerte so hoch wie möglich sind, und entsprechend ein Stahl- oder Nylonseil fest gespannt werden kann, ohne das es herausrutscht. Zudem muss es mehrere Kilogramm Gewicht tragen können.

Es wurden daraufhin durch das Auftragen von Grafit auf die Innenseite des Spannzylinders andere Reibungswerte erzeugt. Die Kosten für eine professionelle serienreife Beschichtung von Grafit auf die Spannzylinder erwiesen sich jedoch als zu hoch.

Des Weiteren darf sich beim Spannen eines Stahl- oder Nylonseils an einem Punkt A das Stahl oder Nylonseil am anderen Ende, also an Punkt B nicht automatisch herausdrehen. Um also ein Stahl- oder Nylonseil über eine Strecke von Punkt A nach Punkt B spannen zu können, benötigt der Seilhalter z.B. am Punkt A ein Rechtsgewinde und am Punkt B ein Linksgewinde.

Das Gewinde selbst musste ebenfalls verlängert werden, damit die Bauwand des Seilspanners eine ausreichende Stärke hat, um hohe Zugkräfte auszuhalten.

Eine weitere Besonderheit ist, dass es nicht unbedingt zwingend erforderlich ist, den Seilhalter in Verbindung mit dem Seilspannergehäuse zu verwenden, um ein Stahl- oder Nylonseil von Punkt A nach Punkt B zu spannen. Die Seilhalter lassen sich mit ihrem Gewinde in beliebige Werkstoffe hereindrehen. So lässt sich also auch z.B. ein Stahl- oder Nylonseil zu optischen und Design-Zwecken spannen und anwenden.

Vorteilhafte Ausgestaltungen der Erfindung sind in den Unteransprüchen angeführt.

### Ausführungsbeispiele

Im Folgenden werden mehrere Ausführungsbeispiele anhand von Zeichnungen näher beschrieben. In allen Zeichnungen haben gleiche Bezugszeichen die gleiche Bedeutung und werden daher gegebenenfalls nur einmal erläutert. Für jedes der dargestellten Ausführungsbeispiele gibt es 2 Varianten, einmal mit einem Rechtsgewinde und einmal mit einem Linksgewinde zum Einschrauben des Seilhalters in den Spannzylinder.

Es zeigen
- Figur 1: eine seitliche Ansicht eines ersten Seilspanners,
- Figur 2: eine Ansicht des Seilspanners nach Figur 1 von vorn,
- Figur 3: einen Längsschnitt c-c in Figur 2,
- Figur 4: eine Explosionsdarstellung des Seilspanners nach den Figuren 1-3,
- Figur 5: eine perspektivische Ansicht des Seilhalters, der in das Gehäuse der Seilspanner einzuschrauben ist,
- Figur 6: eine perspektivische Ansicht des Konusteils 80 des Seilhalters,
- Figur 7: einen Längsschnitt durch den Federstopfen 40 des Seilhalters,
- Figur 8: eine perspektivische Darstellung eines der Futterbacken 70 des Seilhalters,
- Figur 9: eine perspektivische Darstellung des Spannzylinders 60 des Seilhalters, wobei das Gewinde 9 allerdings nur angedeutet, aber nicht dargestellt ist und wobei noch andere bauliche Varianten möglich sind,
- Figur 10: einen Längsschnitt durch den Spannzylinder 60 nach Figur 9,
- Figur 11: eine perspektivische Darstellung eines Seilspanners nach einem weiteren Ausführungsbeispiel in runder Form mit Deckel 4 einschließlich einem seitlich eingedrehten Seilhalter,
- Figur 12: eine perspektivische Darstellung des Seilspanners nach Figur 11 mit abgenommenem Deckel,
- Figur 13: eine Ansicht des Seilspanners von vorn,
- Figur 14: eine perspektivische Ansicht von 2 Seilspannern in runder Form mit Deckel einschließlich jeweils einem seitlich eingedrehten Seilhalter und einem eingespannten Drahtseil, im Zustand vor der Spannung des Drahtseils,
- Figur 15: eine Darstellung nach Figur 14, aber nach der Spannung des Drahtseils,
- Figur 16: einen Seilspanner nach einem dritten Ausführungsbeispiel, in runder Form und für eine Stirnmontage vorgesehen, bereits befestigt an einer Wand und mit eingespannten Drahtseil,
- Figur 17: ein Seilspannergehäuse für die Stirnseitenmontage ohne Deckel, z. B. für den Seilspanner nach Figur 16, in perspektivischer Darstellung,
- Figur 18: den Seilspanner nach den Figuren 16 und 17 in einer Ansicht auf die Unterseite, mit einer Bohrung zur Befestigung des Seilspanners an einer ebenen Fläche,
- Figur 19: eine perspektivische Darstellung eines Seilspanners nach einem 4. Ausführungsbeispiel, in kubischer Form mit Deckel, einschließlich einem seitlich eingedrehten Seilhalter,
- Figur 20: eine perspektivische Darstellung des Seilspanners nach Figur 19 zusammen mit dem abgenommenem Deckel,
- Figur 21: eine perspektivische Darstellung eines Seilspanners nach einem 5. Ausführungsbeispiel, in kubischer Form, mit stirnseitig eingedrehten Seilhalter und
- Figur 22: den Seilspanner nach Figur 21 in einer Ansicht von unten, mit der Bohrung zur Befestigung des Seilspanners an einer ebenen Fläche.

### Aufbau der Seilspanner, bestehend aus Seilspannergehäuse mit eingedrehtem Seilhalter

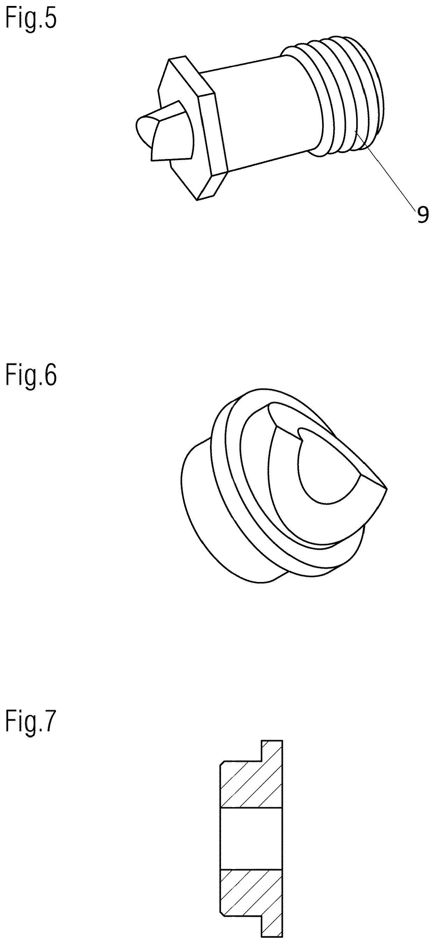

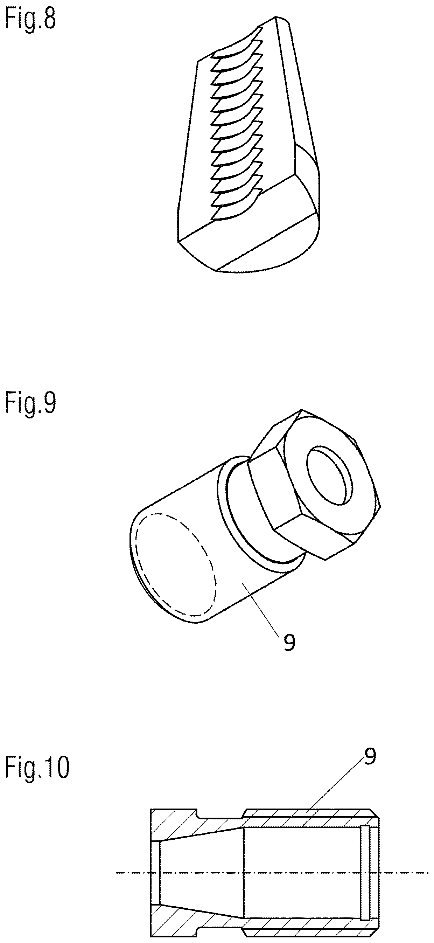

Der Aufbau der ersten Variante des Seilspanners mit eingedrehten Seilhalter ist in den Figuren 1 bis 10 dargestellt, mit Befestigungsblech (unterem Gehäuseteil) 10, oberem Gehäuseteil 20, Schraube 30, Federstopfen 40, Sicherungsring 50, Spannzylinder 60, Futterbacken 70 mit einer krallenartigen Gripper-Fläche zum Halten des Seils, Konusteil 80, Feder (Spiralfeder) 90. Zu erkennen ist außerdem das eingespannte Drahtseil 2.

Von Vorteil ist es, dass die Schraube 30 zur Befestigung des Seilspanners an der Wand oder an einem Balken mittels einer durch eine Bohrung 3 an der Innenseite des Gehäuses eingesteckten Schraube 30 erfolgt, sodass der Schraubenkopf innerhalb des Gehäuses liegt und nicht von außen sichtbar ist.

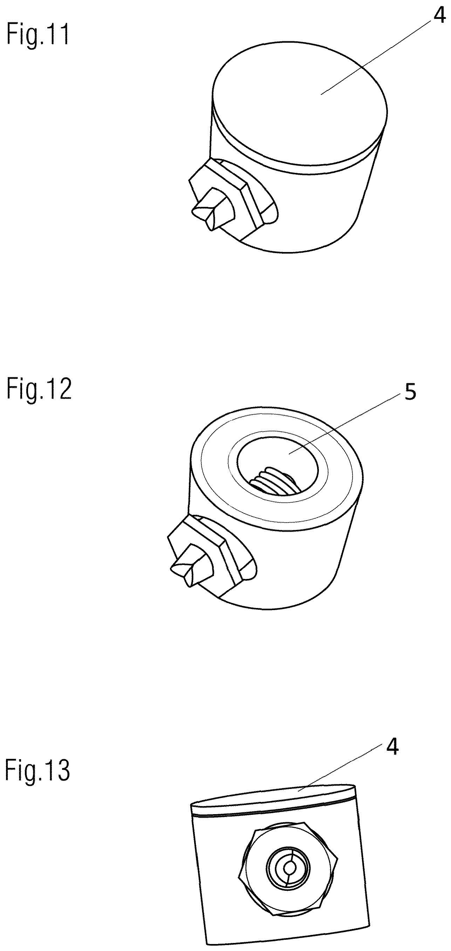

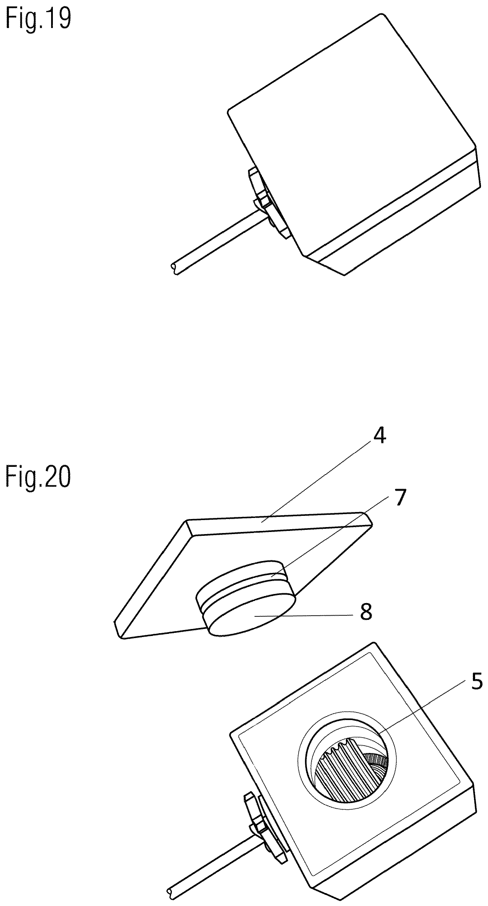

Wenn kein separates Montageblech 10 vorgesehen ist, so wird dies erreicht, wenn an der der Bohrung 3 gegenüberliegenden Seite eine mit einem Deckel 4 verschließbare Öffnung 5 vorhanden ist (vergleiche Figuren 12 und 20), durch die ein Werkzeug zum Eindrehen der Schraube 30 geführt werden kann. Dies gilt bei seitlicher Montage. Bei stirnseitiger Montage dient die Gewindebohrung zur Aufnahme der Seilhalters gleichzeitig als Öffnung 5, um das Gehäuse an der Wand oder dergl. zu montieren.

Die Figuren 11 bis 13 zeigen das zweite Ausführungsbeispiel des Seilspanners. Bei abgenommenem Deckel 4 (vergleiche Figur 12) kann bei noch nicht eingedrehten Seilhalter 1 ein Werkzeug durch die Öffnung 5 hin durchgeführt werden, um eine hier nicht dargestellte Schraube zur Befestigung des Seilspanners an einer Wand einzudrehen.

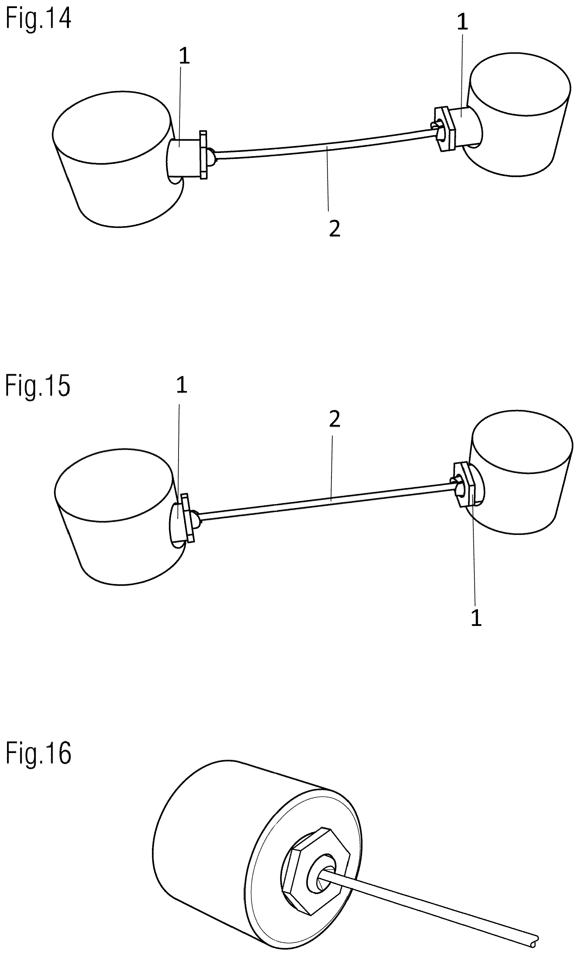

Ein Set von 2 Seilspannern mit jeweils einem Linksgewinde und einem Rechtsgewinde für den Seilhalter ist in den Figuren 14 und 15 dargestellt, jeweils vor dem Spannen des Drahtseils 2 (Figur 14) und nach dem Spannen (Figur 15). Erkennbar ist dies an den vorstehenden bzw. in das Seilspanner-Gehäuse eingedrehten Seilhalter. Daraus wird auch plausibel, warum beide Seilspanner ein gegenläufiges Gewinde haben müssen.

Bei einem Zweier-Set werden daher jeweils ein Seilspanner-Korpus mit Rechtsgewinde und ein Seilspanner-Korpus mit Linksgewinde geliefert. So lässt sich ein eingefädeltes Seil spannen, ohne das es sich auf der anderen Seite wieder herausdreht.

Es kann sich bei dem Seil um ein Stahlseil oder auch Nylonseil handeln. Letztendlich lassen sich alle Seile mit einem Durchmesser von 2 mm damit spannen.

In den Figuren 16 bis 18 ist ein Seilspanner mit rundem Gehäuse, aber für die stirnseitigen Montage dargestellt. Die Bohrung 3 zu Befestigung des Gehäuses des Seilspanners an der Unterseite 6 des Seilspanners ist in Figur 18 erkennbar.

Eine weitere Variante des Seilspanners ist den Figuren 19 und 20 dargestellt. Hier hat der Seilspanner eine kubische Form mit einem Deckel. Der Seilhalter ist seitlich eingedreht. Bemerkenswert ist außerdem die Innenseite des Deckels 4, welche einen Vorsprung 8 hat, mit dem die Öffnung 5 des Gehäuses des Seilspanners verschlossen werden kann (Figur 20). Zur Abdichtung ist hier eine Nut 7 vorgesehen, in der ein Gummiring, zum Beispiel ein O-Ring eingelegt werden kann. Damit ist das Innere des Gehäuses des Seilspanners wasserdicht verschließbar.

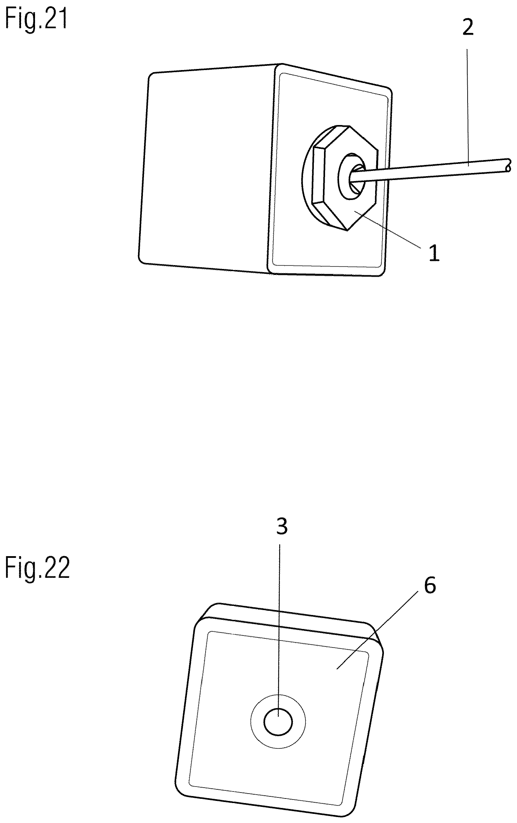

Schließlich ist in den Figuren 21 und 22 ein weiteres Ausführungsbeispiel des Seilspanners dargestellt, welcher ähnlich der vorherigen Variante ist, aber mit einem stirnseitig eingedrehten Seilhalter versehen ist. An der dem Seilhalter gegenüberliegenden Gehäusewand, die die Unterseite 6 des Seilspanners darstellt, ist auch hier eine Bohrung 3 zu Befestigung des Seilspanners an einer Wand oder einem Balken oder dergleichen zu erkennen. Auch hier liegt nach der Montage der Kopf der Befestigungsschraube im Innern des Gehäuses und stört nicht das äußere Aussehen/Design des Seilspanners.

### Arbeitsweise mit dem erfindungsgemäßen Seilspanner

Im Folgenden wird die Arbeitsweise der Erfindung im Detail erläutert:
Zum Einführen des Seil werden die aus dem Spannzylinder 60 hervorstehenden Enden der Spannbacken 70 gegen die Kraft der Feder 90 in den Spannzylinder 60 hineingedrückt, so dass die Spannbacken 70 sich öffnen. Das Seil wird zwischen die Spannbacken 70 eingeführt. Dann lässt man die Spannbacken 70 los und die Feder 90 drückt die Spannbacken wieder in ihre ursprüngliche, aus dem Spannzylinder hervorstehenden Lage, wobei die Spannbacken sich schließen und das Seil festklemmen.

### Bezugszeichenliste

- 1: Seilhalter
- 2: Drahtseil
- 3: Bohrung
- 4: Deckel
- 5: Öffnung
- 6: Unterseite des Seilspanners
- 7: Nut
- 8: Vorsprung
- 9: Gewinde des Seilhalters
- 10: Befestigungsblech, unteres Gehäuseteil
- 20: Gehäuse, oberes Gehäuseteil
- 30: Schraube
- 40: Federstopfen
- 50: Sicherungsring
- 60: Spannzylinder
- 70: Futterbacken
- 80: Konusteil
- 90: Feder, Spiralfeder

## Patentansprüche

1. Seilspanner mit einem Seilhalter (1) mit einem Spannzylinder (60), welcher ein Gehäuse für den Seilhalter (1) bildet, mit einem im Wesentlichen innenliegenden Klemmelement, das einen nach außen gerichteten Bereich hat und das sich durch Druck auf den nach außen gerichteten Bereich gegen die Kraft einer Feder (90) aus einer Klemmposition in eine Freigabeposition bewegt,
wobei das Klemmelement mehrere Spannbacken (70) aufweist, die sich durch Druck auf den nach außen gerichteten Bereich voneinander lösen, und wobei die Feder (90) geeignet ist, über ein Konusteil (80) die Spannbacken (70) zusammenzudrücken,
wobei der Seilspanner ein äußeres, im Gebrauch geschlossenes Gehäuse aufweist, das den Seilhalter (1) im Wesentlichen umschließt,
wobei der Spannzylinder (60) ein Außengewinde (9) aufweist und in einer mit einem Innengewinde versehenen Durchführung in dem äußeren Gehäuse angeordnet ist,
wodurch der Seilhalter (1) geeignet ist, ein Seil durch Verdrehen des Außengewindes (9) gegenüber dem Innengewinde zu spannen,
wobei das äußere Gehäuse eine Bohrung (3) aufweist, die zur Aufnahme eines Befestigungselements (30), insbesondere einer Schraube, geeignet ist,
wobei das äußere Gehäuse einteilig ist, **dadurch gekennzeichnet, dass** die Bohrung (3) gegenüber einer verschließbaren Öffnung angeordnet ist, welche die mit dem Innengewinde versehene Durchführung bildet, und
dass durch die mit dem Innengewinde versehene Durchführung in dem äußeren Gehäuse bei nicht eingedrehtem Seilhalter (1) ein Werkzeug hindurchführbar ist, welches geeignet ist zum Eindrehen eines in der Bohrung (3) angeordneten Befestigungselements (30) zur Befestigung des Seilspanners an einer Wand.

2. Seilspanner nach Anspruch 1,
**dadurch gekennzeichnet,**
**dass** die Spannbacken (70) des Seilhalters eine konische Außenfläche haben, dass der Spannzylinder (60) an seinem einen Ende eine konische Innenwand aufweist, deren spitzes Ende nach außen gerichtet ist und in welchem die Spannbacken (70) einliegen, und dass die Feder (90) auf das stumpfe Ende der konischen Spannbacken (70) drückt.

3. Seilspanner nach Anspruch 1,
**dadurch gekennzeichnet,**
**dass** die Spannbacken (70) des Seilhalters mit ihrem spitzen Ende aus dem Spannzylinder (60) hervorstehen.

4. Seilspanner nach Anspruch 1,
**dadurch gekennzeichnet,**
**dass** zwei Spannbacken (70) vorgesehen sind.

5. Seilspanner nach Anspruch 1,
**dadurch gekennzeichnet,**
**dass** der Seilspanner eine quaderförmige, insbesondere kubische Form, oder eine zylindrische Form aufweist und dass der Seilhalter an der Stirnseite des Seilspanners angebracht ist.

6. Set von Seilspannern nach einem der oben genannten Ansprüche mit zwei Seilspannern mit je einem Seilhalter,
**dadurch gekennzeichnet,**
**dass** der eine Seilspanner eine Rechtsgewinde und der andere Seilspanner ein Linksgewinde aufweist.

## Claims

1. Cable tensioner comprising a cable holder (1) having a tensioning cylinder (60) which forms a housing for the cable holder (1), and having a substantially internal clamping element which has an outwardly directed region and which moves from a clamping position to a release position as a result of pressure on the outwardly directed region against the force of a spring (90),
the clamping element comprising a plurality of clamping jaws (70) which separate from one another as a result of pressure on the outwardly directed region, and the spring (90) being suitable for pressing the tensioning jaws (70) together via a taper part (80),
the cable tensioner comprising an outer housing which is closed when in use and which substantially encloses the cable holder (1),
the tensioning cylinder (60) having an outer thread (9) and being arranged in the outer housing in a passage having an inner thread,
whereby the cable holder (1) is suitable for tensioning a cable by turning the outer thread (9) relative to the inner thread,
the outer housing comprising a bore (3) which is suitable for receiving a fixing element (30), in particular a screw,
the outer housing being in one piece, **characterized in that** the bore (3) is arranged opposite a closable opening which forms the passage having the inner thread, and **in that** when the cable holder (1) is not screwed in, a tool can be passed through the passage in the outer housing that comprises the inner thread, which tool is suitable for screwing in a fixing element (30) arranged in the bore (3) in order to fix the cable tensioner to a wall.

2. Cable tensioner according to claim 1,
**characterized in that**
the clamping jaws (70) of the cable holder comprise a conical outer surface, **in that** the tensioning cylinder (60) comprises, at one end, a conical inner wall, the pointed end of which is directed outward and in which tensioning cylinder the clamping jaws (70) are inserted, and **in that** the spring (90) presses on the blunt end of the conical clamping jaws (70).

3. Cable tensioner according to claim 1,
**characterized in that**
the pointed end of the clamping jaws (70) of the cable holder protrude from the tensioning cylinder (60).

4. Cable tensioner according to claim 1,
**characterized in that**
two clamping jaws (70) are provided.

5. Cable tensioner according to claim 1,
**characterized in that**
the cable tensioner is a cuboid, in particular cubic, shape, or a cylindrical shape and **in that** the cable holder is attached to the end face of the cable tensioner.

6. Set of cable tensioners according to any of the aforementioned claims, comprising two cable tensioners each having a cable holder,
**characterized in that**
one cable tensioner comprises a right-hand thread, and the other cable tensioner a left-hand thread.

## Revendications

1. Tendeur de câble comportant un support pour câble (1) comportant un cylindre de tension (60) qui forme un boîtier pour le support pour câble (1), comportant un élément de serrage situé sensiblement à l'intérieur qui possède une zone orientée vers l'extérieur et qui se déplace d'une position de serrage à une position de libération par pression sur la zone orientée vers l'extérieur à l'encontre de la force d'un ressort (90),
dans lequel l'élément de serrage présente plusieurs mâchoires de tension (70) qui se libèrent les unes des autres par pression sur la zone orientée vers l'extérieur, et dans lequel le ressort (90) est adapté pour comprimer les mâchoires de tension (70) par l'intermédiaire d'une partie conique (80),
dans lequel le tendeur de câble présente un boîtier extérieur fermé lors de l'utilisation qui entoure sensiblement le support pour câble (1),
dans lequel le cylindre de tension (60) présente un filetage extérieur (9) et est disposé dans un passage pourvu d'un filetage intérieur dans le boîtier extérieur,
moyennant quoi le support pour câble (1) est adapté pour tendre un câble en faisant tourner le filetage extérieur (9) par rapport au filetage intérieur,
dans lequel le boîtier extérieur présente un alésage (3) qui est adapté pour recevoir un élément de fixation (30), en particulier une vis,
dans lequel le boîtier extérieur est en une seule pièce, **caractérisé en ce que** l'alésage (3) est disposé en face d'une ouverture pouvant être obturée, laquelle forme le passage pourvu du filetage intérieur,
**et en ce que,** lorsque le support pour câble (1) n'est pas vissé, un outil peut être passé à travers le passage pourvu du filetage intérieur dans le boîtier extérieur, lequel outil est adapté pour visser un élément de fixation (30) disposé dans l'alésage (3) pour la fixation du tendeur de câble à un mur.

2. Tendeur de câble selon la revendication 1,
**caractérisé en ce**
**que** les mâchoires de tension (70) du support pour câble présentent une surface extérieure conique, **en ce que** le cylindre de tension (60) présente à l'une de ses extrémités une paroi intérieure conique dont l'extrémité pointue est orientée vers l'extérieur et dans laquelle reposent les mâchoires de tension (70), **et en ce que** le ressort (90) appuie sur l'extrémité émoussée des mâchoires de tension (70) coniques.

3. Tendeur de câble selon la revendication 1,
**caractérisé en ce**
**que** les mâchoires de tension (70) du support pour câble dépassent du cylindre de tension (60) avec leur extrémité pointue.

4. Tendeur de câble selon la revendication 1,
**caractérisé en ce**
**que** deux mâchoires de tension (70) sont prévues.

5. Tendeur de câble selon la revendication 1,
**caractérisé en ce**
**que** le tendeur de câble présente une forme parallélépipédique, en particulier cubique, ou une forme cylindrique, **et en ce que** le support pour câble est monté sur la face frontale du tendeur de câble.

6. Ensemble de tendeurs de câble selon l'une des revendications précédentes, comportant deux tendeurs de câble comportant respectivement un support pour câble,
**caractérisé en ce**
**que** l'un des tendeurs de câble présente un filetage droit et l'autre tendeur de câble présente un filetage gauche.
